# EUROPEAN PATENT SPECIFICATION

(11) **EP 4 496 917 B1**
(45) Date of publication and mention of the grant of the patent: **18.02.2026**
(21) Application number: 23713113.1
(22) Date of filing: 23.03.2023
(51) Int. Cl.: D04H 3/12, D04H 3/002, D04H 3/004, D04H 3/115, D04H 3/04, B29C 70/22, F03D 1/06

(54) **FUNCTIONALIZED FABRIC**
FUNKTIONALISIERTES GEWEBE
TISSU FONCTIONNALISÉ

(30) Priority: 23.03.2022 EP 22305346
(43) Date of publication of application: 29.01.2025
(73) Proprietor: Owens Corning Intellectual Capital, LLC, Toledo, OH 43659 (US)
(72) Inventor: BOUCARD, Nadege, 38480 Le Pont de Beauvoisin (FR); JOUANNAUX, Julien, 38330 Saint-Ismier (FR); BLANDIN, David, 73490 LA RAVOIRE (FR)
(74) Representative: Haseltine Lake Kempner LLP
(86) International application number: PCT/EP2023/057415
(87) International publication number: WO 2023/180420

(56) References cited:
- WO-A1-2012/110041
- WO-A1-2015/177163
- US-A1- 2007 025 859

## Description

### Field of the Invention

The present invention relates to functionalized fabrics including glass fibers and/or carbon fibers and their production, in particular functionalized fabrics to reinforce structural components such as wind turbine components.

### Background

It is known to use glass and/or carbon fibers to form reinforcement fiber fabrics to reinforce structural components such as wind turbine blades or related components (e.g. spar caps). Structural components containing reinforcement fiber fabrics (reinforced structural components) are often formed by stacking layers of reinforcement fiber fabrics in a mold, filling the mold with a resin, and curing the resin to form the component. This process can be time consuming.

Wind power and the use of wind turbines have gained increased attention as the quest for alternative energy sources continues. With increasing interest in generating more energy from wind power, technological advances in the art have allowed for increased sizes of wind turbines blades. Increasing the size of wind turbine blades also increases the time required to produce the wind turbine blades and potentially raises issues in connection with conformance and quality control.

It would be desirable to provide improvements in efficiency and conformance of the production of reinforced structural components such as wind turbine blades.

WO 2015/177163 A1 describes aqueous curable binder compositions for glass fiber fabrics which comprise one or more fluorescent dyes. The binders are preferably thermoset resins.

### Summary of the Invention

At its most general, the present invention provides a functionalized fabric comprising a fiber fabric and binder wherein the binder comprises, consists of, or consists essentially of a fluorescent material (for example, a UV fluorescent material) and its production. The binder which comprises, consists of, or consists essentially of a fluorescent material may be referred to herein as fluorescent binder.

In a first aspect, the present invention provides a functionalized fabric comprising:
a fiber fabric; and
binder comprising, consisting of, or consisting essentially of a fluorescent material, wherein the fiber fabric comprises: first fibers oriented in a first direction; and second fibers oriented in a second direction, wherein the first fibers comprise glass fibers and/or carbon fibers, the second fibers comprise glass fibers and/or carbon fibers, and the second direction is within 0 to 90 degrees of the first direction, wherein the binder comprises a thermoplastic resin having a glass transition temperature of up to about 70°C.

In a second aspect, the present invention provides a fabric stack comprising at least two layers of a functionalized fabric described herein.

In a third aspect, the present invention provides a shaped component comprising a fabric stack described herein.

In a fourth aspect, the present invention provides a process for producing a functionalized fabric, the process comprising:
providing a fiber fabric comprising first fibers oriented in a first direction and second fibers oriented in a second direction, the second direction being within 0 to 90 degrees of the first direction, the first fibers comprising glass fibers and/or carbon fibers, and the second fibers comprising glass fibers and/or carbon fibers; and
applying binder comprising, consisting of, or consisting essentially of a fluorescent material, to the fiber fabric to provide the functionalized fabric, wherein the binder comprises a thermoplastic resin having a glass transition temperature of up to about 70°C.

In a fifth aspect, the present invention provides a process for producing a shaped component, the process comprising:
stacking a plurality of layers of a functionalized fabric described herein;
shaping the stacked plurality of layers of fabric to form a shaped stack;
heating the shaped stack at a temperature up to about 150 °C to provide a shaped component.

Disclosed herein is a composite article comprising a shaped component described herein.

Also disclosed herein is a method of making a composite article comprising impregnating the shaped component described herein with a resin and curing the resin to form the composite article.

In a sixth aspect, there is provided a method of assessing the distribution of fluorescent binder on a functionalized fabric described herein by exposing the binder to UV light to cause them to fluoresce.

The fluorescing binder may be viewed, detected or analyzed. For example, the fluorescent binder may be viewed, detected or analyzed by eye, either aided or unaided.

In any of the aspects of the invention the fluorescent material may be a UV fluorescent material, or the fluorescent binder may be UV fluorescent binder.

The method for assessing the distribution of fluorescent binder may be part of a production process, for example an in-line process.

The present inventors have found that the present invention provides a functionalized fabric which provides improvements in the efficiency of the production of reinforced structure components such as wind turbine blades and related components. The present inventors have also found that the present invention provides a means by which improved analysis and characterization is provided and which is reflected in the associated functionalized fabrics, shaped components and composite articles.

Further, the present inventors have surprisingly found that fiber fabrics comprising low amounts of binder as described herein, (for example, less than 5 wt.% (for example less than 3.5 wt.% or 0.1 to 3.5 wt.%), by total weight of the functionalized fabric and/or from about 2 to about 30 g/m² (for example about 2 to about 20 g/m²) of the functionalized fabric), and having a glass transition temperature of up to about 70 °C can be stacked and shaped (i.e. pre-shaped) before being incorporated into a reinforced structural component. The provision of the functionalized fabrics described herein has been found to surprisingly increase the speed at which a reinforced structural component, e.g. a wind turbine blade, can be produced. Even more surprisingly, the present inventors have found that the functionalized fabrics described herein can provide improvements in the efficiency of the production of reinforced structural components, e.g. wind turbine blades, without detrimentally effecting the mechanical properties of the fabrics or the final components.

The present inventors have also found that the use of binder, which fluoresces when exposed to electromagnetic radiation such as UV light, in the production of functionalized fabrics provides a means by which the quality of the functionalized fabrics (and associated components) may be assessed in a straight-forward manner.

The invention includes the combination of the aspects and preferred features described herein except where such a combination is clearly impermissible or expressly avoided.

### Brief Description of the Figures

Embodiments and experiments illustrating the principles of the invention will now be discussed with reference to the accompanying figures in which:
Figure 1 is a graph showing the particle size distribution of different binder particles that may be applied to a fiber fabric to produce a functionalised fabric as described herein;
Figure 2 is an image produced by a 3D microscope of a functionalised fabric described herein;
Figures 3a and 3b are images of fluorescent binder on a surface of a fiber fabric;
Figure 4a is an image produced by a 3D microscope of a functionalized fabric described herein;
Figure 4b is a graph showing the binder particle size distribution on the surface of the functionalized fabric shown in figure 4a.

### Detailed Description

Aspects and embodiments of the present invention will now be discussed with reference to the accompanying figures. Further aspects and embodiments will be apparent to those skilled in the art.

Described herein is a functionalized fabric comprising a fiber fabric and binder wherein the binder comprises, consists of, or consists essentially of a fluorescent material.

### Fiber Fabric

The fiber fabric comprises:
first fibers oriented in a first direction; and
second fibers oriented in a second direction,
wherein the first fibers comprise glass fibers and/or carbon fibers, the second fibers comprise glass fibers and/or carbon fibers, and the second direction is within 0 to 90 degrees of the first direction.

The first fibers of the fiber fabrics may be referred to as warp fibers. The first fibers may be arranged side by side and substantially parallel to one another. The second fibers of the fiber fabric may be referred to as weft fibers. The second fibers may be arranged side by side and substantially parallel to one another.

In embodiments, the fiber fabric comprises first fibers oriented in a first direction and second fibers oriented in a second direction, wherein the second direction is within 0 to 90 degrees of the first direction, for example, within about 10 degrees to about 90 degrees of the first direction, within about 20 degrees to about 90 degrees of the first direction, within about 30 degrees to about 90 degrees of the first direction, within about 40 degrees to about 90 degrees of the first direction, within about 45 degrees to about 90 degrees of the first direction, within about 60 degrees to about 90 degrees of the first direction, within about 70 to about 90 degrees of the first direction, within about 80 to about 90 degrees of the first direction, within about 85 to about 90 degrees of the first direction, within about 88 to about 90 degrees of the first direction, or within about 90 degrees of the first direction.

In embodiments, the fiber fabric may be a unidirectional fabric or a multiaxial fabric such as a biaxial fabric.

In embodiments, the fiber fabric is a unidirectional fabric. A fiber fabric that is a unidirectional fabric can comprise second fibers oriented in a second direction wherein the second direction is oriented in a direction greater than 0 degrees of the first direction. For example, a unidirectional fabric may comprise first fibers oriented in a first direction and second fibers oriented in a second direction, wherein the second direction is from about 0 to 90 degrees of the first direction, for example, within about 45 degrees to about 90 degrees of the first direction, within about 60 degrees to about 90 degrees of the first direction, within about 70 to about 90 degrees of the first direction, within about 80 to about 90 degrees of the first direction, within about 85 to about 90 degrees of the first direction, within about 88 to about 90 degrees of the first direction, or within about 90 degrees of the first direction. In a unidirectional fabric the first fibers may constitute greater than about 90 wt.% of the fiber fabric, for example greater than about 92 wt.% of the fiber fabric, or at least about 95 wt.% of the fiber fabric. In a unidirectional fabric the second fibers may constitute up to about 10 wt.%, for example up to about 8 wt.%, or up to about 5 wt.% of the fiber fabric. In a unidirectional fabric, the second direction may be substantially perpendicularly to the first direction, the first fibers may constitute greater than 92 wt.% of the fiber fabric, and the second fibers may constitute up to about 8 wt.% of the fiber fabric. In embodiments, the fiber fabric is a unidirectional fabric, the second direction is substantially perpendicularly to the first direction and the weight ratio of first fibers to second fibers is in the range of 15:1 to 25:1.

In embodiments, the fiber fabric is a biaxial fabric. In a biaxial fabric the second direction may be within about 20 degrees to about 90 degrees of the first direction, for example the second direction may be within about 30 degrees to about 90 degrees of the first direction, the second direction may be within about 40 degrees to about 90 degrees of the first direction, the second direction may be within about 45 degrees to about 90 degrees of the first direction, the second direction may be within about 60 degrees to about 90 degrees of the first direction, within about 70 to about 90 degrees of the first direction, within about 80 to about 90 degrees of the first direction, within about 85 to about 90 degrees of the first direction, within about 88 to about 90 degrees of the first direction, or within about 90 degrees of the first direction. In embodiments, the fiber fabric is a biaxial fabric wherein the second direction is around 25 to 75 degrees of the first direction, for example about 45 degrees of the first direction. In embodiments, the fiber fabric is a biaxial fabric wherein the second direction is at least 45 degrees of the first direction. In embodiments, the fiber fabric is a biaxial fabric and the second direction is substantially perpendicular to the first direction. In embodiments where the fiber fabric is a biaxial fabric the second fibers constitute greater than 5 wt.% of the fiber fabric. In embodiments where the fiber fabric is a biaxial fabric the second fibers may constitute at least about 10 wt.% of the fiber fabric, for example at least about 15 wt.%, at least about 20 wt.%, or at least about 25 wt.% of the fiber fabric.

In embodiments, at least the first fibers or the second fibers comprise, consist essentially of, or consist of glass fibers.

In embodiments, glass fibers constitute at least about 50 wt.% of the fiber fabrics described herein, for example at least about 60 wt.% of the fiber fabric, at least about 70 wt.% of the fiber fabric, at least about 80 wt.% of the fiber fabric, at least about 90 wt.% of the fiber fabric, or at least about 95 wt.% of the fiber fabric.

The term "glass fibers" is used herein to refer to a plurality of continuous glass filaments (the term "continuous" as used here is used to refer to a fiber/filament that has a length many times longer than its diameter, for example at least about 5000 times longer than its diameter, e.g. at least about 10 000 times longer than its diameter). The glass fibers used in the fabrics described herein may be provided as glass fiber strands (or tows). The glass fibers may be formed by a continuous manufacturing process in which molten glass passes through the holes of a "bushing," the streams of molten glass thereby formed are solidified into filaments/fibers. The glass fibers described herein (e.g. the glass fibers of the first and/or second fibers) may include a sizing on their surface, e.g. a sizing applied on the glass fibers during formation of the fibers. The sizing can include components such as a film former, lubricant, coupling agent (to promote compatibility between the glass fibers and the resin used to form a composite article comprising the hybrid fabric described herein), etc. that facilitate formation of the glass fibers and/or use thereof in a matrix resin. In some embodiments, the glass fibers of first and/or second fibers include a polyester compatible sizing or an epoxy compatible sizing.

The term "glass fiber strand" or "glass fiber tow" as used herein, refers to a bundle of continuous glass filaments. In embodiments the glass fiber strands or tows are bundles of untwisted glass filaments.

In embodiments, glass fiber strands or glass fiber tows are provided from glass fiber direct rovings. Glass fiber direct rovings are made up of a bundle of continuous untwisted (i.e. substantially parallel, or parallel) glass filaments bonded (as the glass filaments are formed) into a single strand and wound onto a bobbin.

Any suitable glass reinforcing fibers may be employed as the first or second fibers, for example, fibers made from E glass, E-CR glass (such as Advantex^{™} glass fibers available from Owens Corning), C glass, H glass, S glass, and AR glass types can be used.

In embodiments, the glass fibers referred to herein (for example, the first fibers which may be glass fibers and/or the second fibers that may be glass fibers) have a linear mass density in the range of about 50 Tex to about 5000 Tex, for example about 200 Tex to about 4800 Tex, about 300 Tex to about 2500 Tex, about 300 Tex to about 2400 Tex, or about 600 Tex to about 1200 Tex.

The term "carbon fibers" is used herein to refer to a plurality of continuous carbon filaments, (the term "continuous" as used here is used to refer to a fiber/filament that has a length many times longer than its diameter, for example at least about 5000 times longer than its diameter, e.g. at least about 10 000 times longer than its diameter). The carbon fibers used in the fabrics described herein may be provided as carbon fiber tows (or strands) which are bundles of continuous carbon filaments. The carbon fibers described herein (e.g. the carbon fibers of the first and/or second fibers) may include a sizing on their surface, e.g. a sizing applied on the carbon fibers during formation of the fibers. The sizing can include components such as a film former, lubricant, coupling agent (to promote compatibility between the carbon fibers and the resin used to form a composite article comprising the hybrid fabric described herein), etc. that facilitate formation of the carbon fibers and/or use thereof in a matrix resin. In some embodiments, the carbon fibers include a polyester compatible sizing or an epoxy compatible sizing.

In embodiments, the carbon fibers have a linear mass density in the range of about 100 Tex to about 5000 Tex, for example about 200 Tex to about 5000 Tex, about 400 Tex to about 5000 Tex, about 600 Tex to about 5000 Tex, about 800 Tex to about 5000 Tex, about 100 Tex to about 4800 Tex, about 200 Tex to about 4800 Tex, 400 Tex to about 4800 Tex, about 600 Tex to about 4800 Tex, about 800 Tex to about 4800 Tex, about 100 Tex to about 2400 Tex, about 200 Tex to about 2400 Tex, about 400 Tex to about 2400 Tex, about 100 Tex to about 2000 Tex, about 200 Tex to about 2000 Tex, about 400 Tex to about 2000 Tex, about 600 Tex to about 2000 Tex, about 800 Tex to about 2000 Tex, or about 1200 Tex.

In embodiments, carbon fibers (where present) are provided by carbon fiber tows (strands of carbon fibers). In embodiments, the carbon fiber tows have a size in the range of 6K to 50K, for example 6K to 24K, or 6K to 12K. For example, the first fibers may be fed from one or more carbon fiber tows having a size in the range of 6K to 50K, for example 6K to 24K, or 6K to 12K. The nomenclature #K means that the carbon tow is made up of # x 1,000 individual carbon filaments, i.e. a carbon fiber tow having a size of 6K is made up of approximately 6000 carbon fiber filaments/fibers.

In embodiments, the fiber fabric is a non-crimp fabric, the first and second fibers are maintained in their respective orientations with a stitching yarn (as opposed to the first and second fibers being woven together, i.e. a non-crimp fabric is a non-woven fabric). Any suitable stitching yarn may be employed. In embodiments, the stitching yarn is a polyester yarn. In embodiments, the stitching yarn has a linear mass density in the range of about 50 dTex to about 300dTex. In embodiments, the stitching yarn forms a stitching pattern through the fabric, the stitching pattern may be selected from a tricot stitching pattern, a symmetric double tricot stitching pattern, an asymmetric double tricot stitching pattern, a symmetric stitching pattern, and an asymmetric stitching pattern. In embodiments, the stitching yarn forms a stitching pattern through the fabric, the stitching pattern being a tricot stitching pattern. In embodiments, the stitching yarn defines a stitching length, the stitching length being in the range of about 2 mm to about 7 mm, for example about 3 mm.

In embodiments, the fiber fabric is a woven fabric, for example a plain woven fabric, warp knitted fabric or a twill woven fabric.

In embodiments, the fiber fabric consists essentially of or consists of glass fibers and/or carbon fibers. In embodiments, the fiber fabric consists essentially of or consists of glass fibers and carbon fibers. In embodiments, the fiber fabric consists essentially of or consists of glass fibers.

In embodiments, the fiber fabric comprises glass fibers. In embodiments the fiber fabric comprises additional fibers in addition to glass fibers. In embodiments, the fiber fabric includes additional fibers in addition to glass fibers and/or carbon fibers. Examples of other fibers which may be included in the fiber fabric include polymer fibers such as PET.

In embodiments, the fiber fabric has an areal weight in the range of about 200 g/m² to about 2500 g/m², for example about 300 g/m² to about 2000 g/m², for example about 500 g/m² to about 1500 g/m², for example about 500 g/m² to about 1300 g/m². The areal weight of the fiber fabric may be determined according to ISO 3374.

In embodiments, the fiber fabric comprises:
first fibers oriented in a first direction; and
second fibers oriented in a second direction,
wherein the first fibers comprise glass fibers, the second fibers comprise glass fibers, the second direction is within 45 to 90 degrees of the first direction, and the first and second fibers being maintained in their respective orientations with a stitching yarn.

In embodiments, the fiber fabric comprises:
first fibers oriented in a first direction; and
second fibers oriented in a second direction,
wherein the first fibers comprise glass fibers, the second fibers comprise glass fibers, the second direction is within 45 to 90 degrees of the first direction, the first and second fibers being maintained in their respective orientations with a stitching yarn, and the glass fibers of first and/or second fibers including a polyester compatible sizing or an epoxy compatible sizing.

In embodiments, the fiber fabric comprises:
first fibers oriented in a first direction; and
second fibers oriented in a second direction,
wherein the first fibers comprise glass fibers, the second fibers comprise glass fibers, the second direction is within 45 to 90 degrees of the first direction, the first and second fibers are maintained in their respective orientations with a stitching yarn, the glass fibers of first and/or second fibers including a polyester compatible sizing or an epoxy compatible sizing, and the fiber fabric having an areal weight in the range of about 500 g/m² to about 2500 g/m².

### Binder

The functionalized fabric comprises binder. The binder may be in the form of binder particles. The functionalized fabric may be described herein as comprising binder particles. The functionalized fabric may be described herein as comprising a fiber fabric with binder particles adhered to a surface of the fiber fabric.

The binder (e.g. binder particles) comprises, consists of, or consists essentially of a fluorescent material. The binder and the fluorescent material may together comprise one or more than one type of material. The fluorescent material may be one or more than one fluorescent material. The binder fluoresces in response to incident electromagnetic radiation, i.e. light. The fluorescent material or more than one fluorescent material may be a UV fluorescent material which is taken to mean that the material fluoresces when exposed to UV light.

UV light radiates at shorter wavelengths than visible light. When UV light is absorbed by fluorescent materials it is reflected back towards the observer as longer wavelength visible light. The colours of the observed fluorescence will depend on the material and the wavelength of the light that is being used. For example, a UV source with the appropriate wavelength may be used in combination with a given UV fluorescent material.

Fluorescence and fluorescent material generally means any material, pigment, compound or agent that absorbs electromagnetic radiation, i.e. light, at certain frequencies and re-emits it at lower frequencies so that a fabric on which the fluorescent material is present appears to glow when exposed to electromagnetic radiation, i.e. light, of the lower frequencies. Reference to fluorescent material(s) will be taken to include reference to phosphorescent materials. The incident radiation may be referred to as possessing an exciting wavelength.

Exciting wavelength is understood to be electromagnetic radiation that includes a wavelength that causes the fluorescent material to glow. Typically, the exciting wavelength corresponds to that of UV light or visible light.

The presence of the fluorescent material results in the binder glowing when radiation of a suitable wavelength is incident thereon. The wavelength of the incident radiation may correspond to the wavelength of visible light or UV light. Visible light is generally taken to be in the range of about 380 nm to about 750 nm. UV light is generally taken to be in the range of about 10 nm to about 400 nm. The use of UV fluorescent material is preferred given that it may not be required for the binder to glow in typical every day lighting conditions. With respect to the use of UV light, the wavelength of the incident UV light or radiation may be about 10 nm to about 400 nm, for example about 100 nm to about 400 nm, or about 200 nm to about 400 nm, or about 300 nm to about 400 nm, or about 250 nm to about 380 nm. Typical specific examples are about 254 nm or about 365 nm.

The source of electromagnetic radiation may be provided by any suitable source of radiation which are well known to the skilled person.

The fluorescent material may be selected from any known fluorescent material. The fluorescent material may be a polymer or a material other than a polymer. In embodiments, the binder comprises or is composed of a fluorescent resin, for example a fluorescent polyester resin.

In the functionalized fabric, the fluorescent material may be present in amount of up to about 5 wt.% based on the total weight of the functionalized fabric, for example up to about 4.5 wt.%, up to about 4.0 wt.%, or up to about 3.5 wt.% of the functionalized fabric. In embodiments, the fluorescent material may constitute at least about 0.05 wt.% of the functionalized fabric, for example at least about 0.1 wt.%, at least about 0.2 wt.%, or at least about 0.3 wt.% of the functionalized fabric. In embodiments, the fluorescent material constitutes from about 0.05 wt.% to about 5.0 wt.% of the functionalized fabric, for example from about 0.1 wt.% to about 3.5 wt.% of the functionalized fabric.

In embodiments, the functionalized fabric comprises up to about 30 g/m² of the fluorescent material, for example, up to about 25 g/m², up to about 20 g/m², up to about 18 g/m², up to about 16 g/m², up to about 15 g/m², or up to about 13 g/m² of the fluorescent material. In embodiments, the functionalized fabric comprises at least about 2 g/m² of the fluorescent material, for example at least about 4 g/m², at least about 5 g/m², at least about 7 g/m², at least about 8 g/m², or at least about 10 g/m² of the fluorescent material. In embodiments, the functionalized fabric comprises from about 2 g/m² to about 30 g/m² of the fluorescent material, for example about 4 g/m² to about 25 g/m², about 4 g/m² to about 15 g/m², about 7 g/m² to about 13 g/m², or about 10 g/m² to about 13 g/m² of the fluorescent material.

In embodiments, the binder (e.g. binder particles) comprises, consists essentially of, or consists of a resin binder. The binder (e.g. binder particles) comprises or is composed of a thermoplastic resin. In embodiments, the binder (e.g. binder particles) comprises or is composed of a thermoplastic resin selected from an epoxy resin, an acrylate resin, or a polyester resin. In embodiments, the binder (e.g. binder particles) comprises or is composed of a thermoplastic resin selected from an epoxy resin or a polyester resin. In embodiments, the binder (e.g. binder particles) comprises or consists of a resin comprising epoxy, acrylate, or ester functional groups, for example a resin comprising epoxy, or ester functional groups. In embodiments, the binder (e.g. binder particles) comprises or consists of a biobased resin, for example a biobased resin comprising epoxy, acrylate, or ester functional groups. The resin or thermoplastic resin may itself provide the fluorescent properties or be the fluorescent material. The fluorescent properties may be provided by a material other than the resin or thermoplastic resin. As such, the fluorescent material may be any of the materials described herein as binder particles. For example, the fluorescent material may be selected from one or more of fluorescent polymer resins, including those mentioned herein, for example polyester resin, which may be saturated or unsaturated, or epoxy resin. Other suitable fluorescent polymer resins include polyacrylate or acylate functionalized polymer or polymers.

The binder (e.g. binder particles) has a glass transition temperature of up to about 70°C, for example up to about 65 °C, up to about 60 °C, or up to about 55 °C. In embodiments, the binder has a glass transition temperature of at least about 30 °C, for example at least about 35 °C, or at least about 40 °C. In embodiments, the binder (e.g. binder particles) has a glass transition temperature in the range of about 40 °C to about 70 °C. The glass transition temperature of the binder may be determined using differential scanning calorimetry (DSC) according to EN ISO 11357-2 (determination of glass transition temperature). The glass transition temperature of the binder may be determined using differential scanning calorimetry (DSC) according to EN ISO 11357-2 (determination of glass transition temperature) wherein the glass transition temperature is determined as the value provided on the second heating cycle. The glass transition temperature of the binder may be determined according to the EN ISO 11357-2 test method by heating the binder under an air flow of 80 mL/min at a heating rate of 10K/min, heating from - 60 °C to 120 °C. In embodiments, the glass transition temperature of the binder may be determined according to the EN ISO 11357-2 test method by heating the binder under an air flow of 80 mL/min at a heating rate of 10K/min, heating from -60 °C to 120 °C and then holding for 5 mins at 120 °C before cooling from 120 °C to - 60 °C at a cooling rate of 10K/min and then holding for 5 mins at - 60 °C before heating from - 60 °C to 120 °C again at a heating rate of 10K/min and the glass transition temperature is determined as the value provided on the second heating cycle.

In embodiments, the binder (e.g. binder particles) has a melting point such that the binder is completely molten when exposed to a temperature of up to about 120 °C for at least suitable time period, for example when exposed to a temperature of up to about 110 °C for at least suitable time period, when exposed to a temperature of up to about 100 °C for at least suitable time period , or when exposed to a temperature of up to about 90 °C for at least suitable time period. In embodiments, the binder has a melting point such that the binder is completely molten when exposed to a temperature in the range of about 60 °C to about 120 °C, for example about 80 °C to about 120 °C for at least suitable time period. The suitable time period may be up to 1 hour, for example up to 30 mins. The suitable time period may be at least about 1 min, for example, at least about 5 mins or at least about 10 mins.

In embodiments, the binder (e.g. binder particles) has a softening temperature in the range of about 50°C to about 100 °C, for example about 60°C to about 100 °C. In embodiments, the softening temperature may be determined using an oscillatory rheometer at 0.1% deformation in plan-plan geometry, a frequency of 1 Hz with a binder sample having a thickness of 400 µm and diameter of 25 mm, employing a heating-cooling-heating cycle which heats from 30°C-130°C at a rate of 3°C/min, cooling from 130°C-30°C and heating from 30°C-130°C at a rate of 3°C/min. The softening temperature is taken during the first heating.

In embodiments, the binder is applied to the fiber fabric as binder particles. The binder particles before being applied to the fiber fabric may have a volume average particle size of up to about 1 mm, for example up to about 800 µm, up to about 600 µm, up to about 500 µm, up to about 400 µm, up to about 300 µm, or up to about 200 µm. In embodiments, the binder particles before being applied to the fiber fabric have a volume average particle size of greater than about 10 µm, for example greater than about 20 µm, greater than about 30 µm, greater than about 40 µm, or greater than about 50 µm. In embodiments, the binder particles before being applied to the fiber fabric have a volume average particle size in the range of about 10 µm to about 1mm, for example about 20 µm to about 600 µm, about 30 µm to about 500 µm, about 40 µm to about 400 µm, or about 50 µm to about 300 µm. The volume average particle size of the binder particles before being applied to the fiber fabric may be determined using a dynamic light scattering technique on a dispersion of the binder particles. A particle size analyzer such as a LS13320 Particle Size Analyzer from Beckman^{™} may be employed to determine the volume average particle size by laser diffraction (i.e. using a dynamic light scattering technique on a dispersion of the binder particles) in accordance with ISO 13320 2009 norm. The samples are analyzed twice, as received, after dispersion in air and the sample quantity is typically around 20 g per test.

In embodiments, the binder of the functionalized fabric can be described as binder particles.

In embodiments, binder particles applied to the fiber fabric may be adhered to a surface of the fiber fabric such that the functionalized fabric comprises binder particles adhered to a surface. In embodiments, binder particles applied to the surface of a fiber fabric may be adhered to the fiber fabric to form the functionalized fabric.

In embodiments, the binder (comprising, consisting essentially of, or consisting of fluorescent material) may be present in amount of up to about 5 wt.% based on the total weight of the functionalized fabric. In such embodiments, due to the low amount of binder particles applied to the fiber fabric as described herein, the functionalized fabric comprises a fiber fabric with binder particles adhered to the fiber fabric, the binder particles forming distinct binder particles on a surface of the fiber fabric (for example, as opposed to the binder coagulating to form large patches or a layer over the surface of the fiber fabric). The terms "distinct binder particles" and "discrete binder particles" are used herein to refer to binder particles adhered to the surface of the fiber fabric being spaced apart from one another, that is around each binder particle there is an area of the surface of the fiber fabric that is free from binder particles. In embodiments, the binder particles adhered to a surface of the fiber fabric have a longest axial length of less than about 2mm, for example less than about 1 mm.

In embodiments, the binder particles adhered to a surface of the functionalized fabric have a size distribution such that at least about 90 wt.% of the binder particles adhered to a surface of the fiber fabric have a longest axial length of less than about 2mm, for example, less than about 1 mm, less than about 800 µm, less than about 700 µm, less than about 600 µm, or less than about 500 µm. In embodiments, the binder particles adhered to a surface of the functionalized fabric have a size distribution such that the binder particles adhered to a surface of the fiber fabric have a longest axial length of at least about 1 µm, at least about 10 µm, or at least about 20 µm. In embodiments, the binder particles adhered to a surface of the functionalized fabric have a size distribution such that at least about 90 wt.% of the binder particles adhered to a surface of the fiber fabric have a longest axial length of at least about 1 µm, at least about 10 µm, or at least about 20 µm.

In embodiments, the binder particles adhered to a surface of the functionalized fabric have a size distribution such that the binder particles adhered to a surface of the fiber fabric have a longest axial length in the range of about 1 µm to about 1 mm, for example in the range of about 1 µm to about 800 µm.

In embodiments, the binder particles adhered to a surface of the functionalized fabric have a size distribution such that at least about 90 wt.% of the binder particles adhered to a surface of the fiber fabric have a longest axial length in the range of about 1 µm to about 1 mm, for example in the range of about 1 µm to about 800 µm, about 10 µm to about 600 µm, or about 10 µm to about 500 µm.

In embodiments, the binder particles adhered to a surface of the functionalized fabric have a size distribution such that at least 90 % of the binder particles (by number of particles) adhered to a surface of the fiber fabric have a longest axial length of less than about 2mm, for example, less than about 1 mm, less than about 800 µm, less than about 700 µm, less than about 600 µm, or less than about 500 µm. In embodiments, the binder particles adhered to a surface of the functionalized fabric have a size distribution such that at least 90% of the binder particles (by number of particles) adhered to a surface of the fiber fabric have a longest axial length of at least about 1 µm, at least about 10 µm, or at least about 20 µm. In embodiments, the binder particles adhered to a surface of the functionalized fabric have a size distribution such that at least 90% of the binder particles (by number of particles) adhered to a surface of the fiber fabric have a longest axial length in the range of about 1 µm to about 1 mm, for example in the range of about 1 µm to about 800 µm, about 10 µm to about 600 µm, or about 10 µm to about 500 µm.

The longest axial length of a binder particle of the functionalized fabric can be determined by measuring the largest dimension across the binder particle adhered to the fiber fabric. An optical microscope such as a Keyence^{™} optical microscope may be used to determine the longest axial length of a binder particle adhered to the fiber fabric. The binder particle size distribution can be determined using an optical microscope (such as a Keyence^{™} optical microscope, e.g., Keyence^{™} VHX-500) and associated image analysis software (for example, ImageJ software). The binder particle size distribution can be determined using an optical microscope and associated image analysis software (for example, as described herein) to calculate the binder particle size distribution over a given area of functionalized fabric (for example, an area of functionalized fabric in the range of about 5 mm² to about 50 mm², for example an area of functionalized fabric in the range of about 5 mm² to about 20 mm², an area of functionalized fabric in the range of about 5 mm² to about 10 mm²). In Examples, the binder particle size distribution can be determined using an optical microscope and associated image analysis software (for example, as described herein) to calculate the binder particle size distribution over a 5mm² or 10mm² area of functionalized fabric.

In embodiments, the binder of the functionalized fabric can be described as binder particles having a volume average particle size (i.e. after application and adherence/fixing (e.g. by melting) to the fiber fabric) may be determined using a numerical aperture microscope (for example Keyence^{™} VHX-500) and associated image analysis software (for example, the size of each particle may be determined as the largest dimension across the particle, i.e. the longest axial length of the particle adhered to the surface of the fabric). In embodiments, the volume average particle size of the binder particles after application and adherence/fixing to the fiber fabric is in the range of about 10 µm to about 1mm, for example about 20 µm to about 600 µm, about 30 µm to about 500 µm.

In embodiments, the binder of the functionalized fabric can be described as binder particles and the binder particles before being applied to the fiber fabric have a D90 particle size of less than (i.e. 90% by volume of the particles have a particle size less than) about 1 mm, for example less than about 800 µm, less than about 600 µm, less than about 500 µm, less than about 400 µm, less than about 300 µm, or less than about 200 µm. The D90 particle size (by volume) may be determined by sieve analysis according to ISO 8130-1.

In embodiments, the binder (e.g. binder particles) has a shear modulus, G, at 30 °C in the range of about 5 to about 50 Mpa, for example about 5 to about 40 Mpa, or about 7 to about 30 Mpa. The shear modulus, G, at 30 °C of the binder may be determined using an oscillatory rheometer at 0.1% deformation in plan-plan geometry, a frequency of 1 Hz with a binder sample having a thickness of 400 µm and diameter of 25 mm, employing a heating-cooling-heating cycle which heats from 30°C-130°C at a rate of 3°C /min, cooling from 130°C-30°C and heating from 30°C-130°C at a rate of 3°C/min.

In embodiments, the binder (e.g. binder particles) has a dynamic viscosity, η, at 130 °C in the range of about 1 to about 400 Pa.s, for example about 10 to about 400 Pa.s. The dynamic viscosity, η, at 130 °C of the binder may be determined using an oscillatory rheometer at 0.1% deformation in plan-plan geometry, a frequency of 1 Hz with a binder sample having a thickness of 400 µm and diameter of 25 mm, employing a heating-cooling-heating cycle which heats from 30°C-130°C at a rate of 3°C/min, cooling from 130°C-30°C and heating from 30°C-130°C at a rate of 3°C/min.

In embodiments, the binder (e.g. binder particles) comprises or is composed of a resin comprising epoxy functional groups, for example the binder may be an epoxy resin. In embodiments, the binder comprises or is composed of an epoxy resin having a molecular weight, Mw, in the range of about 2000 to about 6000, for example about 3000 to about 6000, about 4000 to about 6000, or about 4500 to about 5500. In embodiments, the binder comprises or is composed of an epoxy resin having a molecular weight, Mw, in the range of about 2000 to about 6000 and a polydispersity in the range of 1 to 5, for example 2 to 4, 2 to 3 or 2.5 to 3 (where polydispersity is calculated as Mw/Mn). In embodiments, the binder comprises or is composed of an epoxy resin and the epoxy resin is an epoxylated BPA or an epoxy novalac. In embodiments, the binder comprises or is composed of an epoxy resin and the epoxy resin is an epoxylated BPA.

In embodiments, the binder (e.g. binder particles) comprises or is composed of a resin comprising ester functional groups, for example the binder may be a polyester resin. In embodiments, the binder comprises or is composed of a polyester resin having a molecular weight, MW, in the range of about 1000 to about 300000. In embodiments, the binder comprises or is composed of an unsaturated polyester resin, for example an aromatic unsaturated polyester resin or an aliphatic unsaturated polyester resin. Examples of suitable polyester-based resins include BPA polyesters such as BPA fumarate polyesters, for example alkoxylated (e.g. ethoxylated or propoxylated) BPA fumarate polyesters.

In embodiments, the binder of the functionalized fabric is disposed on a surface of the fiber fabric. In embodiments, binder particles of the functionalized fabric are disposed on a surface of the fiber fabric. In embodiments, at least some of the binder of the functionalized fabric is present on a surface of the functionalized fabric. For example, at least some of the binder of the functionalized fabric is disposed on a surface of the fiber fabric or between fibers on a surface of the fiber fabric.

In embodiments, the majority of the binder (e.g. binder particles) of the functionalized fabric is disposed on a surface of the fiber fabric. For example, in embodiments, at least 50 wt.% of the binder of the functionalized fabric is disposed on one surface of the fiber fabric, for example at least about 60 wt.%, at least about 75 wt.%, at least about 85 wt.% or at least about 90 wt.%.

In embodiments, the binder of the factionalized fabric may be applied to the fiber fabric in the form of binder particles (which may also be described as powder binder particles), a dispersion comprising the binder or a solution comprising the binder.

In embodiments, the binder of the functionalized fabric may penetrate the fiber fabric. In embodiments, the functionalized fabric may comprise binder within the fiber fabric.

In embodiments, the binder particles when present on the functionalized fabric do not cover or coat, or impregnate an entire surface of the fabric. For any given surface on which the binder particles are present there may be a gap or gaps in the coverage of the functionalized fabric by the binder particles. For any given surface on which the binder particles are present there may be discrete areas or separated portions of binder particles present.

### Functionalized Fabric

The functionalized fabric of the invention comprises a fiber fabric as described herein and binder (e.g. binder particles) as described herein.

The binder (e.g. binder particles) may constitute up to about 5 wt.% of the functionalized fabric. In embodiments, the binder constitutes up to about 5.0 wt.% of the functionalized fabric, for example up to about 4.5 wt.%, up to about 4.0 wt.%, or up to about 3.5 wt.% of the functionalized fabric. In embodiments, the binder constitutes at least about 0.1 wt.% of the functionalized fabric, for example at least about 0.2 wt.%, or at least about 0.3 wt.% of the functionalized fabric. In embodiments, the binder constitutes from about 0.1 wt.% to about 5.0 wt.% of the functionalized fabric, for example from about 0.1 wt.% to about 4.0 wt.%, or from about 0.2 wt.% to about 3.5 wt.% of the functionalized fabric.

In embodiments, glass fibers constitute at least about 50 wt.% of the functionalized fabric, for example at least about 60 wt.% of the functionalized fabric, at least about 70 wt.% of the functionalized fabric, at least about 80 wt.% of the functionalized fabric, or at least about 90 wt.% of the functionalized fabric.

In embodiments, the functionalized fabric comprises up to about 30 g/m² of the binder (e.g. binder particles), for example, up to about 25 g/m², up to about 20 g/m², up to about 18 g/m², up to about 16 g/m², up to about 15 g/m², or up to about 13 g/m² of the binder. In embodiments, the functionalized fabric comprises at least about 2 g/m² of the binder, for example at least about 4 g/m², at least about 5 g/m², at least about 7 g/m², at least about 8 g/m², or at least about 10 g/m² of the binder. In embodiments, the functionalized fabric comprises from about 2 g/m² to about 30 g/m² of the binder, for example about 4 g/m² to about 25 g/m², about 4 g/m² to about 15 g/m², about 7 g/m² to about 13 g/m², or about 10 g/m² to about 13 g/m² of the binder.

In embodiments, the functionalized fabric comprises binder (e.g. binder particles) disposed on a surface of a fiber fabric. The fiber fabric may be described as a generally two-dimensional fabric having a top surface and a bottom surface. In embodiments, the functionalized fabric may comprise a fiber fabric having one surface on which binder is disposed and another surface which is substantially free of binder (for example a surface comprising less than about 0.1 g/m² binder).

In embodiments, the functionalized fabric may comprise binder (e.g. binder particles) within the fiber fabric.

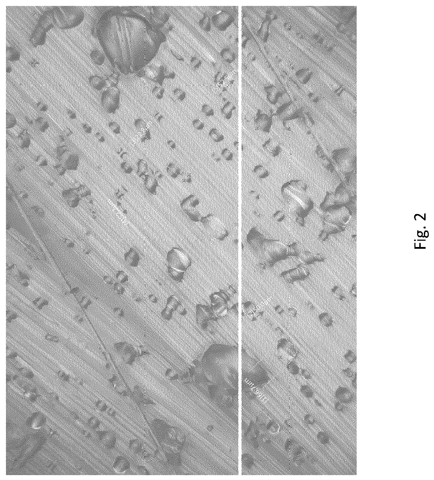

The functionalized fabric comprises a fiber fabric and binder, the binder being adhered to the fiber fabric. In embodiments, the binder is adhered to the fiber fabric, for example a surface of the fiber fabric. In embodiments, the binder may be adhered to the fiber fabric by a suitable treatment such as heating, curing, or exposure to UV radiation for example. In embodiments the binder is adhered to the fiber fabric, for example a surface of the fiber fabric, by being heated such that the binder melts or at least partially melt, for example at least partially melt on a surface of the fiber fabric. For example, the functionalized fabric may comprise solid binder, for example solid binder particles, adhered to the fiber fabric, wherein the binder, for example binder particles, applied to the fiber fabric have previously been softened or at least partially melted. The inventors have found that due to the low amount of binder applied to the fiber fabric, even after melting the binder, discrete areas of binder (may be referred to as binder particles or distinct binder particles) are provided in the functionalized fabric, for example on a surface of the functionalized fabric. Figure 2 is a 3D microscope image of an example of a functionalized fabric as described herein, it can be seen that binder particles applied to the surface of a fiber fabric which were then melted and solidified have not coagulated to form a layer over the fabric surface but instead can be seen as distinct binder particles. The terms "distinct binder particles" or "discrete binder particles" may be used herein to describe binder particles adhered to fiber fabric having a size distribution as described herein. As described above, the terms "distinct binder particles" and "discrete binder particles" are used herein to refer to binder particles adhered to the surface of the fiber fabric being spaced apart from one another, that is around each binder particle there is an area of the surface of the fiber fabric that is free from binder particles. In embodiments, the functionalized fabrics described herein can be described as comprising fiber fabrics having a surface to which binder (e.g., binder particles) is permanently adhered. The term "permanently adhered" is used herein to refer to binder (e.g., binder particles) that cannot be removed from the fiber fabrics by abrasion (for example following the abrasion tests described in the examples section below). The binder (e.g., binder particles) may be permanently adhered to a surface of the fiber fabric by softening or at least partially melting the binder on the surface of the fiber fabric as described herein. For example, binder is considered to be permanently adhered to a surface of a fiber fabric, if following a scrub test carried out according to ISO 11998-2006 (using Elcometer 1720 Abrasion Tester) without liquid and using a microfiber fabric or a Scotch-Brite^{™} 7446 type pad as the abrasive pad (weight of abrasive pad with holder being 455 g, scrubbed surface being 300 mm long, performing 200 runs (back and forth)) no impact on binder adhesion is observed and no weight loss occurs.

In embodiments, at least about 80 wt.% of the binder (e.g., binder particles) is disposed on one surface of the fiber fabric of the functionalized fabric, for example at least about 85 wt.%, at least about 90 wt.%, or at least about 95 wt.% of the binder (e.g., binder particles) are disposed on one surface of the fiber fabric of the functionalized fabric. For example, the functionalized fabric may comprise a fiber fabric having a first surface on which at least about 80 wt.% (e.g., at least about 90 wt.% or at least about 95 wt.%) of the binder (e.g., binder particles) is disposed and a second surface which is substantially free of the binder (for example less than 5 wt.% of the binder (e.g., binder particles) being disposed on the second surface of the fiber fabric, for example less than 3 wt.%, less than 2 wt.%, less than 1 wt.%, or less than 0.5 wt.% of the binder (e.g., binder particles) being disposed on the second surface of the fiber fabric.

In embodiments, the functionalized fabric comprises binder particles adhered to a surface of the fiber fabric. For example, the functionalized fabric may comprise solid binder particles adhered to the fiber fabric, wherein the binder particles have previously been softened or at least partially melted on the surface of the fiber fabric.

In embodiments, the functionalized fabric described herein may be impregnated with a resin and the resin cured to form a composite article.

### Fabric stack

A fabric stack comprises at least two layers of a functionalized fabric as described herein.

In embodiments, a fabric stack comprises at least two layers of a functionalized fabric as described herein wherein one layer of functionalized fabric is directly disposed on another layer of functionalized fabric. In embodiments, the fabric stack comprises at least 3 layers of a functionalized fabric as described herein, for example at least 4 layers, at least 6 layers or at least 8 layers of a functionalized fabric as described herein. In embodiments, the fabric stack comprises up to 50 layers of a functionalized fabric as described herein, for example, up to 30 layers, up to 25 layers, up to 20 layers up to 15 layers, up to 10 layers of a functionalized fabric as described herein. In embodiments, the fabric stack comprises 2-50 layers of a functionalized fabric as described herein, for example 4-30 layers, or 6-25 layers of a functionalized fabric as described herein. In embodiments, the fabric stack comprises a plurality of layers of functionalized fabric as described herein, wherein the each of the plurality of layers of functionalized fabric is directly disposed on another of the plurality of layers of functionalized fabric.

In embodiments, the fabric stack comprises a plurality of layers of functionalized fabric as described herein, each of the plurality of layers of functionalized fabric being directly disposed on another of the plurality of layers of functionalized fabric, each of the plurality of layers of functionalized fabric having one surface on which binder (e.g. binder particles) is disposed and another surface which is substantially free of binder, wherein each of the plurality of functionalized fabrics is stacked such that surfaces of each of the plurality of functionalized fabrics on which the binder is disposed are directly disposed on a surface of another of the plurality of layers of functionalized fabric being substantially free of binder. In embodiments, the layers of the fabric stack are adhered to one another. A fabric stack in which layers of the fabric stack are adhered to one another may be referred to herein as a "consolidated fabric stack".

In embodiments, the layers of the fabric stack may be adhered to one another by a suitable treatment such as heating, curing, or exposure to UV radiation for example. In embodiments, the layers of the fabric stack may be adhered to one another by heating the fabric stack such that the binder particles of a first layer of functionalized fabric adhere the first layer of functionalized fabric to a second layer of functionalized fabric. In embodiments, the layers of the fabric stack may be adhered to one another by heating the fabric stack to a temperature greater than the glass transition temperature of the binder, for example to a temperature at least about 5 °C greater than the glass transition temperature of the binder, to a temperature at least about 10 °C greater than the glass transition temperature of the binder, or to a temperature at least about 15 °C greater than the glass transition temperature of the binder. In embodiments, the layers of the fabric stack may be adhered to one another by heating the fabric stack to a temperature greater than the softening temperature of the binder, for example to a temperature at least about 5 °C greater than the softening temperature, to a temperature at least about 10 °C greater than the softening temperature, or to a temperature at least about 15 °C greater than the softening temperature. In embodiments, the layers of the fabric stack may be adhered to one another by heating the fabric stack to a temperature greater than the melting temperature of the binder. In embodiments, the layers of the fabric stack may be adhered to one another by heating the fabric stack to a temperature of at least about 50 °C, for example at least about 60 °C, at least about 70 °C, at least about 80 °C, at least about 90 °C, or at least about 100 °C. In embodiments, the layers of the fabric stack may be adhered to one another by heating the fabric stack to a temperature of up to about 150 °C, for example up to about 130 °C, or up to about 120 °C. In embodiments, the layers of the fabric stack may be adhered to one another by heating the fabric stack to a temperature in the range of about 50 °C to about 150 °C, for example about 70 °C to about 130 °C, or about 80 °C to about 120 °C. In embodiments, the layers of the fabric stack may be adhered to one another by heating the fabric stack as described above for about 1 minute or more, for example up to about 1 hour, for example from about 1 to about 10 mins.

In embodiments, providing a consolidated fabric stack may comprise adhering the layers of the fabric stack to one another. In embodiments, the layers of the fabric stack may be adhered to one another by exposing the fabric stack to a temperature of up to about 150 °C and a pressure below atmospheric pressure, for example a pressure in the range of about 500 mbar to about 1000 mbar, or about 600 mbar to about 1000 mbar, about 700 mbar to about 1000 mbar, about 750 mbar to about 1000 mbar, about 800 mbar to about 1000 mbar, or about 900 mbar. In embodiments, the fabric stack is exposed to increased temperature (i.e. heated) and/or reduced pressure for a time period of up to about 5 hours, for example up to about 3 hours, up to about 2 hours or up to about 1 hour to form a consolidated fabric stack. In embodiments, the fabric stack is exposed to increased temperature (i.e. heated) and/or reduced pressure for a time period of at least about 10 mins, for example at least about 30 mins to form a consolidated fabric stack. In embodiments, the fabric stack is exposed to increased temperature (i.e. heated) and/or reduced pressure for a time period of about 10 mins to about 5 hours, for example about 30 mins to about 2 hours, or about 30 mins to about 1 hour to form a consolidated fabric stack.

In embodiments, the fabric stack or consolidated fabric stack described herein may be impregnated with a resin and the resin cured to form a composite article.

### Process for producing a functionalized fabric

A process for producing a functionalized fabric may comprise:
providing a fiber fabric as described herein; and
applying binder (e.g. binder particles) as described herein to the fiber fabric to provide the functionalized fabric.

The binder may be applied to the fiber fabric in an amount such that the binder constitutes up to about 5 wt.% of the functionalized fabric.

In embodiments, the process comprises applying binder (e.g. binder particles) to the fiber fabric to provide a functionalized fabric having a binder particle distribution of up to about 30 g/m², for example up to about 20 g/m², up to about 25 g/m², up to about 18 g/m², up to about 16 g/m², up to about 15 g/m², or up to about 13 g/m². In embodiments, the process comprises applying the binder to the fiber fabric to provide a functionalized fabric having a binder particle distribution of at least about 2 g/m², for example at least about 4 g/m², at least about 5 g/m², at least about 7 g/m², at least about 8 g/m², or at least about 10 g/m². In embodiments, the process comprises applying the binder to the fiber fabric to provide a functionalized fabric having a binder particle distribution in the range of about 2 g/m² to about 30 g/m², for example about 4 g/m² to about 20 g/m², about 4 g/m² to about 15 g/m², about 7 g/m² to about 13 g/m², or about 10 g/m² to about 13 g/m².

In embodiments, binder is applied to a surface of the fiber fabric, for example by scattering the binder particles over the surface of the fiber fabric.

In embodiments, the binder is applied to the surface of fiber fabric as binder particles. The binder particles that are applied to the fiber fabric may have a volume average particle size of up to about 1 mm, for example up to about 800 µm, up to about 600 µm, up to about 500 µm, up to about 400 µm, up to about 300 µm, or up to about 200 µm. In embodiments, the binder particles that are applied to the fiber fabric have a volume average particle size of greater than about 10 µm, for example greater than about 20 µm, greater than about 30 µm, greater than about 40 µm, or greater than about 50 µm. In embodiments, the binder particles that are applied to the fiber fabric have a volume average particle size in the range of about 10 µm to about 1mm, for example about 20 µm to about 600 µm, about 30 µm to about 500 µm, about 40 µm to about 400 µm, or about 50 µm to about 300 µm. The volume average particle size of the binder particles that are applied to the fiber fabric may be determined using a dynamic light scattering technique on a dispersion of the binder particles before application to the fiber fabric. A particle size analyzer such as a LS13320 Particle Size Analyzer from Beckman^{™} may be employed to determine the volume average particle size by laser diffraction following the ISO 13320 2009 norm (i.e. using a dynamic light scattering technique on a dispersion of the binder particles before being applied to the fiber fabric). The samples may be analyzed twice, as received, after dispersion in air and the sample quantity is typically around 20 g per test.

In embodiments, the binder (e.g. binder particles) may be adhered to the fiber fabric by a suitable treatment such as heating, curing, or exposure to UV radiation for example. In embodiments, the process comprises heating the functionalized fabric to adhere the binder to the fiber fabric. In embodiments, the process comprises heating the binder to adhere the binder to the fiber fabric. In embodiments, heating the binder/functionalized fabric to adhere the binder to the fiber fabric comprises heating the functionalized fabric to a temperature greater than the glass transition temperature of the binder, for example to a temperature at least about 5 °C greater than the glass transition temperature of the binder, to a temperature at least about 10 °C greater than the glass transition temperature of the binder, or to a temperature at least about 15 °C greater than the glass transition temperature of the binder. In embodiments, heating the binder/functionalized fabric to adhere the binder to the fiber fabric comprises heating the functionalized fabric to a temperature greater than the softening temperature of the binder, for example to a temperature at least about 5 °C greater than the softening temperature, to a temperature at least about 10 °C greater than the softening temperature, or to a temperature at least about 15 °C greater than the softening temperature. In embodiments, heating the binder/functionalized fabric to adhere the binder to the fiber fabric comprises heating the functionalized fabric to a temperature greater than the melting temperature of the binder. In embodiments, heating the binder/functionalized fabric to adhere the binder to the fiber fabric comprises heating the functionalized fabric to a temperature of at least about 50 °C, for example at least about 60 °C, at least about 70 °C, at least about 80 °C, at least about 90 °C, or at least about 100 °C. In embodiments, heating the binder/functionalized fabric to adhere the binder to the fiber fabric comprises heating the functionalized fabric to a temperature of up to about 150 °C, for example up to about 130 °C, or up to about 120 °C. In embodiments, heating the binder/functionalized fabric to adhere the binder to the fiber fabric comprises heating the functionalized fabric to a temperature in the range of about 50 °C to about 150 °C, for example about 70 °C to about 130 °C, or about 80 °C to about 120 °C. In embodiments, heating the binder/functionalized fabric to adhere the binder to the fiber fabric comprises heating the functionalized fabric as described above for about 1 minute or more, for example up to about 1 hour, for example from about 1 to about 10 mins.

In embodiments, for example in which the binder of the factionalized fabric is applied to the fiber fabric in the form of a dispersion comprising the binder or a solution comprising the binder, applying and/or adhering the binder to the fiber fabric may comprise evaporating a liquid component of the binder or solution comprising the binder.

### Shaped component

A shaped component comprises a fabric stack (for example a consolidated fabric stack) as described herein.

A shaped component may be produced by:
a) providing a fabric stack as described herein;
b) shaping the fabric stack; and
c) heating the shaped stack at a temperature up to about 150 °C.

In embodiments, heating the fabric stack comprises heating the fabric stack at a temperature of at least about 50 °C, for example at least about 60 °C, at least about 70 °C, at least about 80 °C, at least about 90 °C, or at least about 100 °C. In embodiments, heating the fabric stack comprises heating the fabric stack at a temperature of up to about 150 °C, for example up to about 130 °C, or up to about 120 °C. In embodiments, heating the fabric stack comprises heating the fabric stack at a temperature in the range of about 50 °C to about 150 °C, for example about 70 °C to about 130 °C, or about 80 °C to about 120 °C.

In embodiments, producing a shaped component may comprise heating the fabric stack at a temperature up to about 150 °C and at a pressure below atmospheric pressure, for example a pressure in the range of about 500 mbar to about 1000 mbar, or about 600 mbar to about 1000 mbar, about 700 mbar to about 1000 mbar, about 750 mbar to about 1000 mbar, about 800 mbar to about 1000 mbar, or about 900 mbar.

In embodiments, the fabric stack is exposed to increased temperature (i.e. heated) and/or reduced pressure for a time period of up to about 5 hours, for example up to about 3 hours, up to about 2 hours or up to about 1 hour to form a shaped article. In embodiments, the fabric stack is exposed to increased temperature (i.e. heated) and/or reduced pressure for a time period of at least about 10 mins, for example at least about 30 mins to form a shaped article. In embodiments, the fabric stack is exposed to increased temperature (i.e. heated) and/or reduced pressure for a time period of about 10 mins to about 5 hours, for example about 30 mins to about 2 hours, or about 30 mins to about 1 hour.

In embodiments, shaping the fabric stack involves placing the fabric stack over or in a mold. In embodiments, shaping the fabric stack involves placing the fabric stack over or in a mold and applying increased heat and/or reduced pressure to the fabric stack.

In embodiments, the shaped component described herein may be impregnated with a resin and the resin cured to form a composite article.

In embodiments, the binder is selected to be compatible with the resin used to form a composite article. For example, epoxy compatible (e.g. epoxy based binder) binder may be selected in cases in which the functionalized fabric is to be incorporated into a composite article comprising an epoxy resin. For example, polyester compatible (e.g. polyester based binder) binder may be selected in cases in which the functionalized fabric is to be incorporated into a composite article comprising a polyester resin. The binder may be selected such that the binder is soluble in the resin used to form a composite article.

### Conformance and Quality control

The use of fluorescent binders in accordance with the present disclosure provides a method or methods for assessing the distribution of binder on the fabric, for example to assess and characterize binder dispersion and the amount present at the surface of the fabric. This may include assessing that the binder (e.g. binder particles) is homogeneously distributed, monitoring defects, counting the particles of binder present (e.g. using image analysis), or incorporating unique identifier(s). The present inventors have found that fluorescent binder provide a better contrast during production compared to when non fluorescent binder is employed.

In accordance with the eighth aspect of the present invention there is provided a method of assessing or detecting the presence or distribution of binder (e.g. binder particles) on a functionalized fabric described herein by exposing the binder to light (e.g. UV light, for example light having a wavelength in the range of about 10 nm to about 400 nm, for example about 100 nm to about 400 nm, or about 200 nm to about 400 nm, or about 300 nm to about 400 nm, or about 250 nm to about 380 nm) to cause it to fluoresce. The fluorescing binder may be viewed, detected or analyzed. For example, the fluorescent binder may be viewed, detected or analyzed by eye, either aided or unaided. The fluorescent binder may be viewed by the human eye or by other means such as a fluorescence detector.

Such a method may be used as part of a manual or automated process, for example as part of a production line and for the purposes of quality control. Examples of quality control include in-line and off-line quality control. The in-line quality control process incorporates inspection points across a production line. These points may inspect the product for quality in terms of various standards or specifications. Generally, in-line quality control is swifter than off-line systems. This is mainly because inspection takes place along the process without additional time required for removal or replacement. The data obtained from these inspections can be used to modify and align the production process in real time which can reduce wastage and save time. The products and methods provided in accordance with the present invention are particularly useful in connection with in-line quality control.

The distribution of the binder can be verified without recourse to destructive testing but with exposure to UV light and without interrupting the production line and thus improving the efficiency of mass production.

### Examples

The following illustrates examples of the fabrics and related aspects described herein. Thus, these examples should not be considered to restrict the present disclosure, but are merely in place to teach how to carry out the processes and obtain the products of the present disclosure.

Functionalized fabrics were produced by applying varying amounts of binder to one surface of different fiber fabrics. The materials used are described below and Table 1 summarises each of the functionalized fabrics of the examples.

### Fiber Fabrics used in the Examples

All of the fiber fabrics used in the Examples were non-crimp fabrics and contained glass first fibers and glass second fibers, the first and second fibers being maintained in their respective orientations by a stitching yarn. The glass fibers making up the fiber fabrics included an epoxy compatible sizing.

Uni-directional fiber fabrics (denoted "UD" in the table below) used in these Examples contained second fibers (glass fibers) constituting up to about 5 wt.% of the fiber fabric, with first fibers (glass fibers) constituting at least 95 wt.% of the fiber fabric, the second direction being substantially perpendicular to the first direction. The uni-directional fabrics are referred to as "UD0", UD0 fabrics contain first fibers oriented in the 0 direction (i.e. aligned with the length of the fabric). Functionalised fabrics comprising UD90 fabrics (fabrics containing first fibers oriented in the 90 direction (i.e. perpendicular to the length of the fabric) may also be prepared.

Bi-axial fiber fabrics can also be used to prepare functionalised fabrics as described herein. For example, functionalised fabrics comprising bi-axial fiber fabrics may be prepared as described in the Examples that follow. Examples of suitable bi-axial fabrics include fabrics containing second fibers (glass fibers) constituting at least about 15 wt.% of the fiber fabric, the second direction being either substantially perpendicular to the first direction (these fabrics may be referred to as "BX90" fabrics) or around 45 degrees to the first direction (these fabrics may be referred to as "BX45" fabrics).

The inventors expect that other fiber fabrics described herein to provide functionalized fabrics provide similar advantages to the fiber fabrics employed in these Examples.

### Measurement methods

The glass transition temperature of the binder was determined using differential scanning calorimetry (DSC) according to EN ISO 11357-2 (determination of glass transition temperature) heating the binder under an air flow of 80 mL/min at a heating rate of 10K/min, heating from - 60 °C to 120 °C and then holding for 5 mins at 120 °C before cooling from 120 °C to - 60 °C at a cooling rate of 10K/min and then holding for 5 mins at - 60 °C before heating from - 60 °C to 120 °C again at a heating rate of 10K/min. The glass transition temperature was determined as the value provided on the second heating cycle.

The volume average particle size of the binder particles that were applied to the fiber fabrics described in the Examples that follow to provide functionalized fabrics were determined using a dynamic light scattering technique on a dispersion of the binder particles using a Particle size analyzer (LS13320 Particle Size Analyzer from Beckman^{™}) and using a dynamic light scattering technique on a dispersion of the binder particles in accordance with ISO 13320 2009 norm.

The shear modulus, G, at 30 °C of the binder employed in the Examples that follow was determined using an oscillatory rheometer at 0.1% deformation in plan-plan geometry, a frequency of 1 Hz with a binder sample having a thickness of 400 µm and diameter of 25 mm, employing a heating-cooling-heating cycle which heats from 30°C-130°C at a heating rate of 3°C/min, cooling from 130°C-30°C and heating from 30°C-130°C at a heating rate of 3°C/min.

The dynamic viscosity, η, at 130 °C of the binder employed in the Examples that follow was determined using an oscillatory rheometer at 0.1% deformation in plan-plan geometry, a frequency of 1 Hz with a binder sample having a thickness of 400 µm and diameter of 25 mm, employing a heating-cooling-heating cycle which heats from 30°C-130°C at a heating rate of 3°C/min, cooling from 130°C-30°C and heating from 30°C-130°C at a heating rate of 3°C/min.

### Binder resins

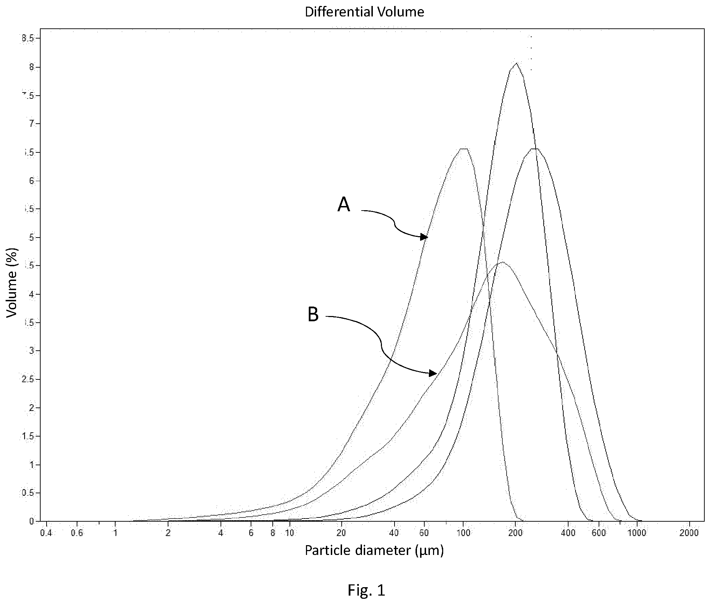

Resin binder polyester-based binder particles were obtained from Coim^{™} having a glass transition temperature of 46 °C (determined using DSC as described above), and a softening point of 57 °C which was determined using an oscillatory rheometer in accordance with the method described above, a volume average particle size of about 185 µm determined using a dynamic light scattering technique by employing a Particle Size Analyzer (LS13320 from Beckman^{™}), see also figure 1, line C, a shear modulus, G, at 30 °C of 30.7 MPa (determined using an oscillatory rheometer as set out above), a dynamic viscosity, η, at 130 °C of 387 Pa.s (determined using an oscillatory rheometer as set out above), a molecular weight, Mw, of 185710 and a polydispersity of 28.87 (determined as Mw/Mn). The polyester binder employed contained fluorescent material which fluoresces in response to UV light.

**Table 1**

| Example | Fiber fabric type | Fiber fabric areal weight (g/m²) | Binder distribution (g/m²) | Amount of binder by total weight of functionalized fabric (wt.%) |
|---|---|---|---|---|
| 1 | UD0 | 1300 | 7 | 0.5 |
| 2 | UD0 | 1300 | 13 | 1.0 |
| 3 | UD0 | 1300 | 15 | 1.2 |
| 4 | UD0 | 600 | 10 | 1.7 |

The functionalized fabrics of Examples 1-4 were provided by applying the resin binders in the amounts shown in Table 1 to the fiber fabrics described above and after application of the resin binders to the fiber fabrics heating to a temperature of 110°C (a temperature greater than the melting temperature of each of the resin binders) for 1 minute and then cooled to room temperature to adhere the binder particles to the surface of the fiber fabrics. Figure 2 shows an example of an image (taken using a 3D microscope) of the surface of a functionalized fabric as described herein in which the binder particles have been adhered to the surface of the fiber fabric by melting and solidification (by cooling) of the binder particles. It can be seen from Figure 2 that the functionalized fabric comprises binder particles adhered to the surface of the fiber fabric (discrete binder particles) are spaced apart from one another, that is around each binder particle there is an area of the surface of the fiber fabric that is free from binder particles.

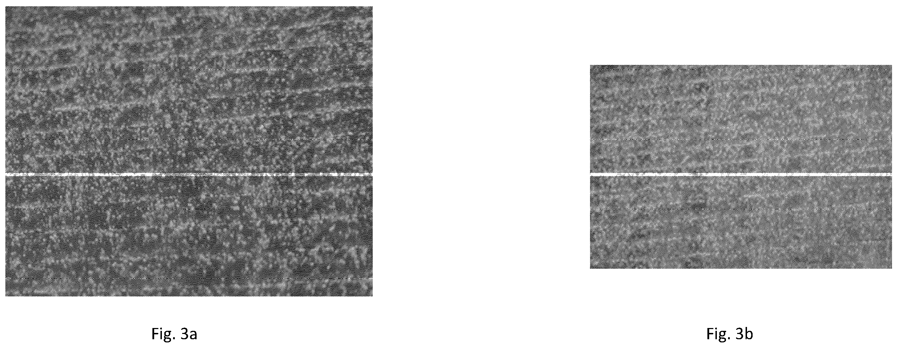

Figures 3a and 3b show examples of images of fluorescent binder particles on a surface of a fiber fabric taken under UV light having a wavelength of 365 nm in connection with Examples 1 and 2. This image shows that a homogeneous distribution of binder particles has been provided. The samples were also viewed under UV light having a wavelength of 254 nm to provide similar images to those shown in figures 3a and 3b. The images provided under UV light having a wavelength of 365 nm were found to be brighter than the images provided when viewed under UV light having a wavelength of 254 nm, the brighter images provided improvements in image analysis.

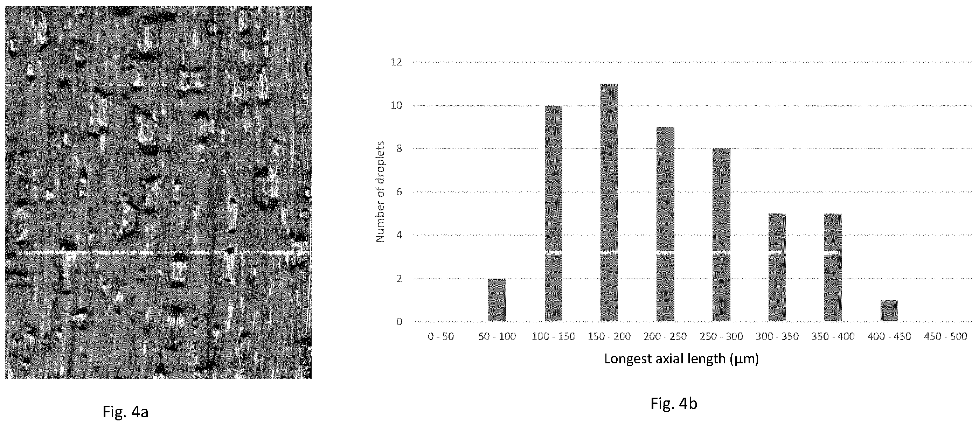

Figure 4a shows an example of an image (taken using a 3D microscope) of the surface of the functionalized fabric produced according to Example 2. Figure 4b is a graph showing the binder particle size distribution on the surface of the functionalized fabric shown in figure 4a. The binder particle size distribution, showing the range in longest axial length of each of the adhered binder particles, was determined using an optical microscope (Keyence^{™} optical miscroscope) and associated image analysis software (ImageJ software) to calculate the binder particle size distribution over a 10 mm² area of the functionalized fabric.

### Abrasion test

The adhesion strength between the fiber fabric and the adhered binder particles of the functionalized fabric of Example 3 was determined using a scrub test (Elcometer 1720 Abrasion Tester) following ISO 11998-2006. The tests were performed without liquid with three abrasive materials: microfiber fabric, Scotch-Brite^{™} 7446 type pad and sandpaper 100 grade. The weight of the abrasive pad with holder is 455 g. Scrubbed surface is 300 mm. 200 runs (back and forth) were performed. For each of the functionalized fabrics tested the following results were obtained:
*Scrub test with microfiber fabrics* - no impact on binder adhesion and no weight loss. Slight visual change is noticed where abrasion of the fiber fabric occurred.

*Scrub test with* Scotch-Brite^{™} *7446 type pad* - no impact on binder adhesion and no weight loss. Slight visual change is noticed where abrasion of the fiber fabric occurred.

*Scrub test with sandpaper P100* - The fabrics were destroyed. After only 5-10 runs fuzz starts to appear. The binder was found to be held within the fuzz glass. This indicates that the adhesion between the adhered binder particles and the fiber fabric is greater than the fiber fabric's resistance to abrasion.

The present inventors expect other functionalized fabrics described herein to show similar resistance to abrasion.

The functionalized fabrics of each of the Examples were found to handle extremely well, without shedding binder.

The functionalized fabrics were then formed into fabric stacks by stacking 5-20 layers, a different fabric stack formed for each of the functionalized fabrics of Examples 1-4.

Each type of fabric stack was then shaped using a mold and heated at reduced pressure of around 900 mBar for a time of around 30 mins to 1 hour. It was found that each of the fabric stacks was successfully consolidated to form a shaped component (i.e. a component taking the form of the mold even after removal from the mold) in this relatively short time period at temperatures ranging from 50-100 °C, with temperatures around 100 °C providing the most defined shaped components.

Each of the shaped components formed form the different functionalized fabrics were then infused with polyester resin. Samples of each of the fiber fabrics used in Examples 1-4 to which binder had not been applied were also infused with polyester resin for comparison. The resin infused shaped components were cured to form composite articles.

The shaped components formed of the functionalized fabrics of Examples 1-4 were found to show excellent infusion speed, in fact showed faster infusion speed than the corresponding fiber fabrics without binder.

It was found that the mechanical performance (for example, shear and strength properties in the 0° (first direction), 45° and 90° directions) of the composite articles comprising the functionalized fabrics of Examples 1-4 were comparable to those of composite articles comprising corresponding fiber fabrics without the binder.

The present inventors also produced and tested similar functionalized fabrics to those described above except using a range of other fiber fabrics described herein to provide functionalized fabrics. These additional functionalized fabrics were found to provide similar advantages to the fiber fabrics employed in these Examples.

Additionally, the inventors have found that the fabric stacks or shaped components described herein can be employed to remarkably improve lay-up speed of composite articles including the shaped components described herein. For example, shaped components comprising the functionalized fabrics described herein can be employed during wind turbine blade manufacture by incorporating a shaped component directly into a wind turbine blade during the lay-up procedure.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A functionalized fabric comprising:
a fiber fabric; and
a binder comprising a fluorescent material,
wherein the fiber fabric comprises: first fibers oriented in a first direction; and second fibers oriented in a second direction, wherein the first fibers comprise glass fibers and/or carbon fibers, the second fibers comprise glass fibers and/or carbon fibers, and the second direction is within 0 to 90 degrees of the first direction;
wherein the binder comprises a thermoplastic resin having a glass transition temperature of up to about 70 °C.

2. A functionalized fabric according to claim 1, wherein the fluorescent material fluoresces in response to UV light.

3. A functionalized fabric according to any one of claims 1 or 2, wherein the fluorescent material is present in amount up to about 5 wt.% based on the total weight of the functionalized fabric.

4. A functionalized fabric according to any one of claims 1 to 3, wherein the binder constitutes from about 0.1 wt.% to about 3.5 wt.% of the functionalized fabric, and/or
wherein the functionalized fabric comprises from about 2 to about 30 g/m² of the binder.

5. A functionalized fabric according to any one of claims 1 to 4, wherein the binder comprises a polymer resin comprising epoxy, acrylate, or ester functional groups.

6. A functionalized fabric according to any one of claims 1 to 5, wherein the binder consists of, or consists essentially of a fluorescent material.

7. A functionalized fabric according to any one of claims 1 to 6, wherein at least the first fibers or the second fibers are glass fibers, or wherein both the first fibers and the second fibers are glass fibers.

8. A functionalized fabric according to any one of claims 1 to 7, wherein the fiber fabric is a non-crimp fabric and the functionalized fabric comprising a stitching yarn, wherein the stitching yarn maintains the first and second fibers in their respective orientations.

9. A functionalized fabric according to any one of claims 1 to 8, wherein the binder comprising a fluorescent material is in the form of binder particles.

10. A fabric stack comprising at least two layers of functionalized fabric according to any of claims 1 to 9, wherein one layer of functionalized fabric according to any of claims 1 to 9 is directly disposed on another layer of functionalized fabric according to any of claims 1 to 9.

11. A shaped component comprising a fabric stack according to claim 10.

12. A process for producing a functionalized fabric, the process comprising:
providing a fiber fabric comprising first fibers oriented in a first direction and second fibers oriented in a second direction, the second direction being within 0 to 90 degrees of the first direction, the first fibers comprising glass fibers and/or carbon fibers, and the second fibers comprising glass fibers and/or carbon fibers; and
applying binder comprising a fluorescent material, to the fiber fabric to provide the functionalized fabric
wherein the binder comprises a thermoplastic resin having a glass transition temperature of up to about 70 °C.

13. A process according to claim 12, further comprising exposing the binder to UV light, and optionally wherein the process is part of an in-line quality control process.

14. A process for producing a shaped component, the process comprising:
stacking a plurality of layers of a functionalized fabric according to any of claims 1 to 9 to provide a fabric stack;
shaping the fabric stack; and
heating the fabric stack at a temperature up to about 150 °C.

15. A method of assessing the distribution of fluorescent binder on a functionalized fabric in accordance with any one of claims 1 to 9, wherein the binder is exposed to UV light, to cause the binder to fluoresce.

## Patentansprüche

1. Funktionalisiertes Gewebe, umfassend:
ein Fasergewebe; und
ein Bindemittel, das ein fluoreszierendes Material umfasst,
wobei das Fasergewebe Folgendes umfasst: erste Fasern, die in einer ersten Richtung ausgerichtet sind; und zweite Fasern, die in einer zweiten Richtung ausgerichtet sind, wobei die ersten Fasern Glasfasern und/oder Kohlenstofffasern umfassen, die zweiten Fasern Glasfasern und/oder Kohlenstofffasern umfassen und die zweite Richtung innerhalb von 0 bis 90 Grad zu der ersten Richtung liegt;
wobei das Bindemittel ein thermoplastisches Harz mit einer Glasübergangstemperatur von bis zu etwa 70 °C umfasst.

2. Funktionalisiertes Gewebe nach Anspruch 1, wobei das fluoreszierende Material als Reaktion auf UV-Licht fluoresziert.

3. Funktionalisiertes Gewebe nach einem der Ansprüche 1 oder 2, wobei das fluoreszierende Material in einer Menge von bis zu etwa 5 Gew.-%, bezogen auf das Gesamtgewicht des funktionalisierten Gewebes, vorhanden ist.

4. Funktionalisiertes Gewebe nach einem der Ansprüche 1 bis 3, wobei das Bindemittel von etwa 0,1 Gew.-% bis etwa 3,5 Gew.-% des funktionalisierten Gewebes darstellt, und/oder wobei das funktionalisierte Gewebe von etwa 2 bis etwa 30 g/m² des Bindemittels umfasst.

5. Funktionalisiertes Gewebe nach einem der Ansprüche 1 bis 4, wobei das Bindemittel ein Polymerharz umfasst, das Epoxid-, Acrylat- oder Ester-funktionelle Gruppe umfasst.

6. Funktionalisiertes Gewebe nach einem der Ansprüche 1 bis 5, wobei das Bindemittel aus einem fluoreszierenden Material besteht oder im Wesentlichen aus einem fluoreszierenden Material besteht.

7. Funktionalisiertes Gewebe nach einem der Ansprüche 1 bis 6, wobei mindestens die ersten Fasern oder die zweiten Fasern Glasfasern sind, oder wobei sowohl die ersten Fasern als auch die zweiten Fasern Glasfasern sind.

8. Funktionalisiertes Gewebe nach einem der Ansprüche 1 bis 7, wobei es sich bei dem Fasergewebe um ein nicht gekräuseltes Gewebe handelt und das funktionalisierte Gewebe ein Nähgarn umfasst, wobei das Nähgarn die ersten und zweiten Fasern in deren jeweiliger Ausrichtung hält.

9. Funktionalisiertes Gewebe nach einem der Ansprüche 1 bis 8, wobei das ein fluoreszierendes Material umfassende Bindemittel in Form von Bindemittelpartikeln vorliegt.

10. Gewebestapel, umfassend mindestens zwei Lagen funktionalisierten Gewebes nach einem der Ansprüche 1 bis 9, wobei eine Lage funktionalisierten Gewebes nach einem der Ansprüche 1 bis 9 direkt auf einer anderen Lage funktionalisierten Gewebes nach einem der Ansprüche 1 bis 9 angeordnet ist.

11. Geformte Komponente, umfassend einen Gewebestapel nach Anspruch 10.

12. Verfahren zum Herstellen eines funktionalisierten Gewebes, wobei das Verfahren Folgendes umfasst:
Bereitstellen eines Fasergewebes, umfassend erste Fasern, die in einer ersten Richtung ausgerichtet sind, und zweite Fasern, die in einer zweiten Richtung ausgerichtet sind, wobei die zweite Richtung innerhalb von 0 bis 90 Grad zu der ersten Richtung liegt, die ersten Fasern Glasfasern und/oder Kohlenstofffasern umfassen und die zweiten Fasern Glasfasern und/oder Kohlenstofffasern umfassen; und
Aufbringen von Bindemittel, das ein fluoreszierendes Material umfasst, auf das Fasergewebe, um das funktionalisierte Gewebe bereitzustellen,
wobei das Bindemittel ein thermoplastisches Harz mit einer Glasübergangstemperatur von bis zu etwa 70 °C umfasst.

13. Verfahren nach Anspruch 12, ferner umfassend Aussetzen des Bindemittels an UV-Licht, und optional wobei das Verfahren Teil eines Inline-Qualitätskontrollverfahrens ist.

14. Verfahren zum Herstellen einer geformten Komponente, wobei das Verfahren Folgendes umfasst:
Stapeln einer Vielzahl von Lagen eines funktionalisierten Gewebes nach einem der Ansprüche 1 bis 9, um einen Gewebestapel bereitzustellen;
Formen des Gewebestapels; und
Erwärmen des Gewebestapels auf eine Temperatur von bis zu etwa 150 °C.

15. Verfahren zum Beurteilen der Verteilung von fluoreszierendem Bindemittel auf einem funktionalisierten Gewebe nach einem der Ansprüche 1 bis 9, wobei das Bindemittel UV-Licht ausgesetzt wird, um zu bewirken, dass das Bindemittel fluoresziert.

## Revendications

1. Tissu fonctionnalisé comprenant :
un tissu de fibres ; et
un liant comprenant un matériau fluorescent,
dans lequel le tissu de fibres comprend : des premières fibres orientées dans une première direction ; et des secondes fibres orientées dans une seconde direction, dans lequel les premières fibres comprennent des fibres de verre et/ou des fibres de carbone, les secondes fibres comprennent des fibres de verre et/ou des fibres de carbone, et la seconde direction est située dans la plage allant de 0 à 90 degrés par rapport à la première direction ;
dans lequel le liant comprend une résine thermoplastique ayant une température de transition vitreuse pouvant aller jusqu'à environ 70 °C.

2. Tissu fonctionnalisé selon la revendication 1, dans lequel le matériau fluorescent devient fluorescent en réponse à la lumière UV.

3. Tissu fonctionnalisé selon l'une quelconque des revendications 1 ou 2, dans lequel le matériau fluorescent est présent en une quantité allant jusqu'à environ 5 % en poids par rapport au poids total du tissu fonctionnalisé.

4. Tissu fonctionnalisé selon l'une quelconque des revendications 1 à 3, dans lequel le liant constitue d'environ 0,1 % en poids à environ 3,5 % en poids du tissu fonctionnalisé, et/ou
dans lequel le tissu fonctionnalisé comprend d'environ 2 à environ 30 g/m² du liant.

5. Tissu fonctionnalisé selon l'une quelconque des revendications 1 à 4, dans lequel le liant comprend une résine polymère comprenant des groupes fonctionnels époxy, acrylate ou ester.

6. Tissu fonctionnalisé selon l'une quelconque des revendications 1 à 5, dans lequel le liant est constitué ou consiste essentiellement en un matériau fluorescent.

7. Tissu fonctionnalisé selon l'une quelconque des revendications 1 à 6, dans lequel au moins les premières fibres ou les secondes fibres sont des fibres de verre, ou dans lequel à la fois les premières fibres et les secondes fibres sont des fibres de verre.

8. Tissu fonctionnalisé selon l'une quelconque des revendications 1 à 7, dans lequel le tissu de fibres est un tissu non ondulé et le tissu fonctionnalisé comprenant un fil de couture, dans lequel le fil de couture maintient les premières et secondes fibres dans leurs orientations respectives.

9. Tissu fonctionnalisé selon l'une quelconque des revendications 1 à 8, dans lequel le liant comprenant un matériau fluorescent est sous forme de particules de liant.

10. Empilement de tissus comprenant au moins deux couches de tissu fonctionnalisé selon l'une quelconque des revendications 1 à 9, dans lequel une couche de tissu fonctionnalisé selon l'une quelconque des revendications 1 à 9 est directement disposée sur une autre couche de tissu fonctionnalisé selon l'une quelconque des revendications 1 à 9.

11. Composant profilé comprenant un empilement de tissus selon la revendication 10.

12. Procédé de production d'un tissu fonctionnalisé, le procédé comprenant :
la fourniture d'un tissu de fibres comprenant des premières fibres orientées dans une première direction et des secondes fibres orientées dans une seconde direction, la seconde direction étant située dans la plage allant de 0 à 90 degrés par rapport à la première direction, les premières fibres comprenant des fibres de verre et/ou des fibres de carbone, et les secondes fibres comprenant des fibres de verre et/ou des fibres de carbone ; et
l'application d'un liant comprenant un matériau fluorescent sur le tissu de fibres pour obtenir le tissu fonctionnalisé
dans lequel le liant comprend une résine thermoplastique ayant une température de transition vitreuse pouvant aller jusqu'à environ 70 °C.

13. Procédé selon la revendication 12, comprenant en outre l'exposition du liant à de la lumière UV, et éventuellement dans lequel le procédé fait partie d'un procédé de contrôle-qualité en ligne.

14. Procédé de production d'un composant profilé, le procédé comprenant :
l'empilement d'une pluralité de couches d'un tissu fonctionnalisé selon l'une quelconque des revendications 1 à 9 pour obtenir un empilement de tissus ;
la mise en forme de l'empilement de tissus ; et
le chauffage de l'empilement de tissus à une température pouvant aller jusqu'à environ 150 °C.

15. Procédé d'évaluation de la répartition d'un liant fluorescent sur un tissu fonctionnalisé selon l'une quelconque des revendications 1 à 9, dans lequel le liant est exposé à de la lumière UV, pour provoquer la fluorescence du liant.
